Europäisches Patentamt

European Patent Office

Office européen des brevets

(11) Veröffentlichungsnummer: **0 459 167 A1**

## (12) EUROPÄISCHE PATENTANMELDUNG

(21) Anmeldenummer: 91107062.1

(22) Anmeldetag: 02.05.91

(51) Int. Cl.5: **F16B 13/14**, E04B 1/38, F16B 13/00

(30) Priorität: 26.05.90 DE 4017032

(43) Veröffentlichungstag der Anmeldung:
04.12.91 Patentblatt 91/49

(84) Benannte Vertragsstaaten:
**AT BE CH DE ES FR GB IT LI NL**

(71) Anmelder: **Eischeid, Karl**
**Schulweg 23**
**W-5250 Engelskirchen(DE)**

(72) Erfinder: **Eischeid, Karl**
**Schulweg 23**
**W-5250 Engelskirchen(DE)**

(74) Vertreter: **Sturies, Herbert et al**
**Patentanwälte Dr. Ing. Dipl. Phys. Herbert**
**Sturies Dipl. Ing. Peter Eichler**
**Brahmsstrasse 29, Postfach 20 12 42**
**W-5600 Wuppertal 2(DE)**

(54) Einrichtung zum Befestigen einer Ankerstange in einem Bohrloch.

(57) Einrichtung zum Befestigen einer Ankerstange (10) in einem Bohrloch (11), in dem insbesondere mehrere ringnutenförmige Hinterschneidungen (12) axial hintereinander angeordnet sind, mit an der Ankerstange (10) vorhandenen Radialvorsprüngen, und mit einer in die Hinterschneidungen (12) und zwischen die Radialvorsprünge (13) eingreifenden Dübelmasse (14).

Um die Auszugfestigkeit der Ankerstange (10) zu verbessern, ist die Einrichtung so augebildet, daß die Ankerstange (10) mehrere die Radialvorsprünge (13) radial überragende, dem Innendurchmesser (D) des Bohrlochs (11) angepaßte Wulste (15) hat, die axial auf Höhe der Hinterschneidungen (12) in deren bohrlochsohlenseitigen Bereich (20) sowie axial mit den Mittenabständen ($m_h$) der Hinterschneidungen (12) entsprechenden Mittenabständen ($m_w$) angeordnet sind, und die radiale, dem Durchtritt von Dübelmasse (14) beim Einsetzen der Ankerstange (10) in das mit Dübelmasse (14) versehene Bohrloch (11) dienende Ausnehmungen (16) aufweisen.

FIG.1

EP 0 459 167 A1

Die Erfindung bezieht sich auf eine Einrichtung zum Befestigen einer Ankerstange in einem Bohrloch, in dem insbesondere mehrere ringnutenförmige Hinterschneidungen axial hintereinander angeordnet sind, mit an der Ankerstange vorhandenen Axialvorsprüngen, und mit einer in die Hinterschneidungen und zwischen die Radialvorsprünge eingreifenden Dübelmasse.

Aus der EP 0 319 736 ist eine Einrichtung mit den vorgenannten Merkmalen bekannt. Die Ankerstange ist im Bereich einer Hinterschneidung mit einem Gewinde versehen, welches die Radialvorsprünge bildet. Der Außendurchmesser dieser Ankerstange hat einen vergleichsweise großen Abstand von der Innenwand des Bohrlochs. Dieser Abstand liegt immerhin etwa in der Größenordnung der Gewindetiefe. Die in diesem Abstand und in der Hinterschneidung vorhandene Dübelmasse ist mit in Wirrlage eingebrachten Stahlnadeln versetzt, um die Auszugfestigkeit der Ankerstange zu verbessern. Eine derartige mit Stahlnadeln versetzte Dübelmasse bedeutet jedoch im Vergleich zu den herkömmlichen Dübelmassen bzw. Klebeankern einen erhöhten Aufwand; denn die Stahlnadeln müssen in unterschiedlichen Längen und Durchmessern verwendet werden und es muß dafür gesorgt werden, daß diese unterschiedlichen Stahlnadeln gleichmäßig gemischt in der Dübelmasse vorhanden sind, damit gleichbleibende Auszugswerte der Ankerstange bzw. mehrerer Ankerstangen erreicht werden.

Demgegenüber liegt der Erfindung die Aufgabe zugrunde, eine Einrichtung mit den eingangs genannten Merkmalen so zu verbessern, daß mit herkömmlichen, also stahlnadelfreien Dübelmassen gearbeitet werden kann, trotzdem aber erhöhte Auszugswerte der Ankerstange erreicht werden, insbesondere auch im Fall der Rißbildung im Bohrlochbereich.

Diese Aufgabe wird dadurch gelöst, daß die Ankerstange mehrere die Radialvorsprünge radial überragende, dem Innendurchmesser des Bohrlochs angepaßte Wulste hat, die axial auf Höhe der Hinterschneidungen in deren bohrlochsohlenseitigen Bereich sowie axial mit den Mittenabständen der Hinterschneidungen entsprechenden Mittenabständen angeordnet sind, und die radiale, dem Durchtritt von Dübelmasse beim Einsetzen der Ankerstange in das mit Dübelmasse versehene Bohrloch dienende Ausnehmungen aufweisen.

Für die Erfindung ist von Bedeutung, daß Maßnahmen zur Verbesserung der Auszugfestigkeit der Ankerstange nicht im Bereich des der Verankerung dienenden Gesteins od.dgl. bzw. im Bereich des Bohrlochs oder im Bereich der Dübelmasse getroffen werden, sondern an der festzusetzenden Ankerstange selbst. Es werden dem Innendurchmesser des Bohrlochs angepaßte Wulste verwendet, wobei die Anpassung so gut wie möglich erfolgt, also im Sinne eines spielfreien Sitzes innerhalb des nicht hinterschnittenen Bohrlochs. Die Wulste sind so angeordnet, daß sie jeweils auf Höhe einer Hinterschneidung anzuordnen sind. In dieser Lage tragen sie dazu bei, die Auszugswerte der Ankerstange zu vergrößern, weil sie im Vergleich zu den Radialsprüngen tiefer in die im Bereich der Hinterschneidungen vorhandene Dübelmasse eingreifen und dementsprechend den sich dem Auszug der Ankerstange durch Abstützen an der Dübelmasse widersetzenden Querschnitt wirksam vergrößern. Die Anordnung der Wulste auf Höhe einer Hinterschneidung erfolgt so, daß sie möglichst weit bohrlochsohlenseitig angeordnet sind, da dann der bei Belastung der Ankerstange in Auszugrichtung zur Verfügung stehende Scherquerschnitt am größten ist. Um das Einschieben der Ankerstange in die in dem Bohrloch befindliche Dübelmasse zu erleichtern, sind die Wulste mit Ausnehmungen versehen. Das Fließen der Dübelmasse um die Ankerstange herum wird erleichtert.

Eine fertigungstechnisch vorteilhafte Einrichtung liegt vor, wenn sie mit einer als Gewindestange ausgebildeten Ankerstange versehen ist, mit dem Kennzeichen, daß die Wulste ein- oder mehrfache Gewindewulste und/oder ein- oder mehrfache Ringwulste sind. Die Wulste können bei der Herstellung der Ankerstange in einfacher Weise angerollt werden. Der Ausdruck Wulst umfaßt also Ein- und Mehrfachringe sowie einen Gewindewulst, der ein- oder mehrfach um die Ankerstange herum gewunden ist.

Die Ankerstange wird vorteilhafterweise so ausgebildet, daß die Wulste mit etwa dreieckigem Querschnitt versehen sind. Infolgedessen besitzen die Wulste Flanken, die bei mit gegen die Stangenachse geneigten Flanken der Hinterschneidungen etwa den Flanken der Hinterschneidungen parallel sind. Dadurch ergibt sich eine Kraftabtragung in die Hinterschneidungen hinein, also mit horizontaler Komponente, was die Auszugfestigkeit der Ankerstange verbessert. Die Abscherungsgefahr der Dübelmasse wird dabei verringert.

Die Einrichtung wird derart ausgestaltet, daß die Ausnehmungen der Wulste den Außendurchmesser der Ankerstange oder der Radialvorsprünge tangierende Abplattungen sind. Diese Abplattungen können problemlos durch Drücken hergestellt werden.

Vorteilhafterweise sind die Ausnehmungen aller Wulste symmetrisch im Winkel zueinander versetzt. Diese Symmetrisierung ist insbesondere günstig für den Fall, daß Rißbildung auftritt. Ein Riß würde die Wände des Bohrlochs quer zur Rißebene voneinander entfernen. Lägen die Ausnehmungen aller Wulste quer zur Rißebene, so würde das eine vergrößerte Verringerung der Auszugfestigkeit der Ankerstange bedeuten, weil die haltenden Wulstflächen wegen der zurückweichenden Bohrlochwände entsprechend entlastet werden. Andererseits stünde in demjenigen Bereich, in dem die Bohrlochwände nicht zurückweichen, infolge der Ausnehmungen keine Wulstfläche der Verfügung. Die symmetrische Verteilung der Ausnehmungen optimiert also die Verteilung des Risikos im Falle einer Rißbildung.

Damit erreicht wird, daß die Wulste die zutreffende Relativlage in Bezug auf die ihnen zugeordneten Hinterschneidungen automatisch einnehmen, ist die Einrichtung so ausgebildet, daß der bohrlochsohlenseitige Wulst vom Ende der Ankerstange **höchstens** ebenso weit entfernt ist, wie die Mittelebene der bohrlochsohlenseitigen Hinterschneidung von der Bohrlochsohle.

Die Ankerstange ist bohrlochsohlenseitig mit einer Schneide versehen, die das Eintreiben der Ankerstange in die Dübelmasse erleichtert.

Die Erfindung wird anhand eines in der Zeichnung dargestellten Ausführungsbeispiels erläutert. Es zeigt:

Fig.1    einen Schnitt durch eine Verankerungsstelle in einer Wand mit der erfindungsgemäßen Einrichtung,

Fig.2    den Schnitt II-II der Fig.1 in vergrößerter Darstellung.

In ein Bohrloch 11 einer Wand 19 ist eine Ankerstange 10 eingesetzt, beispielsweise eine Gewindestange. Das Bohrloch 11 ist mit Hinterschneidungen 12 versehen, nämlich vier in axialer Richtung in gleichmäßigen Abständen verteilten radial vorspringenden Ringnuten mit jeweils einer steileren Flanke 12' und einer dazu etwa im rechten Winkel angeordneten, in Bezug auf die Achse der Ankerstange 10 flacheren Flanke 12". Der Mittenabstand dieser Hinterschneidungen 12 ist mit $m_h$ bezeichnet.

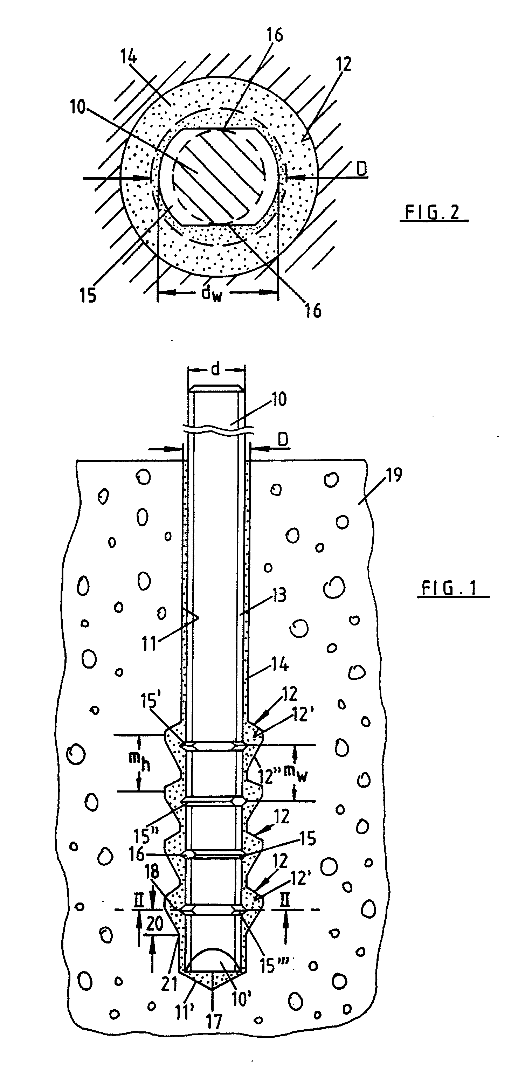

Aus der Darstellung der Fig.1 ist ersichtlich, daß der Durchmesser D des Bohrlochs 11 den Durchmesser d der Ankerstange 10 erheblich übersteigt. Im Zwischenraum ist Dübelmasse 14 vorhanden, also beispielsweise eine aus zwei Komponenten hergestellte Klebemasse, die vor dem Einsetzen der Ankerstange 10 in das Bohrloch 11 z.B. mit herkömmlichen Patronen eingesetzt wird und sich beim Einbringen der Ankerstange 10 innerhalb des Bohrlochs 11 verteilt. Nach dem Verteilen wird die Dübelmasse 14 in an sich bekannter Weise aushärten und infolgedessen die gewünschte Dübelfunktion übernehmen, also das Ausziehen der Ankerstange aus dem Bohrloch 11 verhindern. Dieses Verhindern des Herausziehens der Ankerstange 10 aus dem Bohrloch 11 erfolgt in dem Maße, wie sich die Dübelmasse 14 einerseits an den Wänden des Bohrlochs und andererseits an der Ankerstange 10 festsetzen kann. Das bohrlochwandseitige Festsetzen der Dübelmasse 14 wird im wesentlichen durch die Hinterschneidungen 12 bestimmt, in welche die Dübelmasse 14 eindringt. An der Ankerstange 10 kann die Dübelmasse 14 in die Zahnzwischenräume des Gewindes 13 eindringen, welches Radialvorsprünge bildet.

Zusätzlich wirken Wulste 15. Die Wulste 15 sind Ringwulste, haben also nicht die Steigung des Gewindes 13. Je Hinterschneidung 12 ist ein Wulst 15 dargestellt. Es können aber auch je Hinterschneidung zwei oder mehrere einander parallele Ringe als Wulst 15 vorhanden sein. Anstelle ringförmiger Wulste sind auch Gewindewulste möglich, die sich einmal oder zweimal, gegebenenfalls auch mehrfach um die Ankerstange 10 herumwinden. Unabhängig von der vorgenannten Beschreibung ist jeder Wulst 15 im bohrlochsohlenseitigen Bereich 20 der Hinterschneidungen 12 angeordnet. Das ist für den bohrlochsohlenseitigen Wulst 15''' erläutert, der in der bohrlochsohlenfernsten Anordnung eines Bereichs 20 angeordnet ist, in dem der Wulst 15''' einen möglichst großen Abstand zu seiner Flanke 12" aufweist, um die Auszugfestigkeit zu optimieren. Vorteilhafterweise wird der Wulst 15''' so nahe wie möglich an der bohrlochsohlenseitig engsten Stelle 21 der Hinterschneidung 12 angeordnet. Unabhängig von dieser Anordnung jedes Einzel- oder Mehrfachwulstes 15 sind die Wulste 15 voneinander mit einem Mittenabstand $m_w$ entfernt, wobei dieser Mittenabstand $m_w$ etwa so groß ist, wie der Mittenabstand $m_h$ der Hinterschneidungen 12. Infolgedessen ist es möglich, die Wulste 15 sämtlich in derselben Relativlage zu den Hinterschneidungen 12 anzuordnen, und zwar auf Höhe der größten radialen Vertiefung der Hinterschneidungen 12.

Aus Fig.2 ist ersichtlich, daß der Innendurchmesser D der Bohrung 11 nur geringfügig größer ist, als der Durchmesser $d_w$ der Wulste 15.

Aus Fig.1 ist des weiteren ersichtlich, daß die Wulste 15 dreieckigen Querschnitt haben. Ihre Flanken 15',15", insbesondere aber 15', sind den Flanken 12',12" der Hinterschneidungen 12 parallel, so daß sich eine dementsprechend senkrecht zu den Flanken 12' einstellende Kraftabtragung aus der Ankerstange 10 über deren Wulste 15 ergibt, was die Auszugfestigkeit entsprechend erhöht.

Die Wulste 15 sind mit Ausnehmungen 16 versehen, die als Abplattungen ausgebildet sind. Jeder Wulst 15 ist mit zwei einander diagonal gegenüberliegenden Ausnehmungen 16 versehen. Die Ausnehmungen 16 benachbarter Wulste 15 sind gemäß Fig.1 im Winkel zueinander versetzt. Der Winkel beträgt im Darstellungsfall 60°.

Die Ausnehmungen 16 erleichtern es, die Ankerstange 10 in die Dübelmasse 14 einzusetzen, die infolge der Ausnehmungen 16 an der Ankerstange 10 vorbeifließen kann. Die symmetrische Anordnung der Ausnehmungen 16 erleichtert die koaxiale Anordnung der Ankerstange 10 innerhalb des Bohrlochs 11 und verringert vor allem auch die Gefahr, daß sich die Auszugfestigkeit in Abhängigkeit von der Ausbildung bzw. Anordnung eines Risses unverhältnismäßig vergrößert.

Der der Bohrungssohle 11' benachbarte, also untere Wulst 15''' ist mit einem Abstand von dieser Sohle 11' angeordnet, der höchstens dem Abstand der Mittelebene 18 der bohrlochsohlenseitigen Hinterschneidung 12 von der Bohrlochsohle 11' entspricht. Infolgedessen wird bei einem Einschieben der Ankerstange 10 in das Bohrloch 11 selbsttätig für die richtige Positionierung der Wulste 15 im Bezug auf die Hinterschneidungen 12 gesorgt.

Das untere Ende 10' der Ankerstange 10 ist mit einer Schneide 17 versehen, die das Einschieben der Ankerstange 10 in das Bohrloch 11 erleichtert, indem es die Dübelmasse 14 besser zu teilen erlaubt, gegebenenfalls unter Zerstörung der diese Dübelmasse 14 beinhaltenden Patronen, die zuvor in das Bohrloch 11 eingebracht wurden.

**Patentansprüche**

1. Einrichtung zum Befestigen einer Ankerstange (10) in einem Bohrloch (11), in dem insbesondere mehrere ringnutenförmige Hinterschneidungen (12) axial hintereinander angeordnet sind, mit an der Ankerstange (10) vorhandenen Radialvorsprüngen, und mit einer in die Hinterschneidungen (12) und zwischen die Radialvorsprünge (13) eingreifenden Dübelmasse (14), **dadurch gekennzeichnet,** daß die Ankerstange (10) mehrere die Radialvorsprünge (13) radial überragende, dem Innendurchmesser (D) des Bohrlochs (11) angepaßte Wulste (15) hat, die axial auf Höhe der Hinterschneidungen (12) in deren bohrlochsohlenseitigen Bereich (20) sowie axial mit den Mittenabständen ($m_h$) der Hinterschneidungen (12) entsprechenden Mittenabständen ($m_w$) angeordnet sind, und die radiale, dem Durchtritt von Dübelmasse (14) beim Einsetzen der Ankerstange (10) in das mit Dübelmasse (14) versehene Bohrloch (11) dienende Ausnehmungen (16) aufweisen.

2. Einrichtung nach Anspruch 1, mit einer als Gewindestange ausgebildeten Ankerstange (10), **dadurch gekennzeichnet,** daß die Wulste (15) ein- oder mehrfache Gewindewulste und/oder ein- oder mehrfache Ringwulste sind.

3. Einrichtung nach Anspruch 1 oder 2, **dadurch gekennzeichnet,** daß die Wulste (15) mit etwa dreieckigem Querschnitt versehen sind.

4. Einrichtung nach einem oder mehreren der Ansprüche 1 bis 3, **dadurch gekennzeichnet,** daß die Ausnehmungen (16) der Wulste (15) den Außenumfang der Ankerstange (10) oder der Radialvorsprünge (13) tangierende Abplattungen sind.

5. Einrichtung nach einem oder mehreren der Ansprüche 1 bis 4, **dadurch gekennzeichnet,** daß die Ausnehmungen (16) aller Wulste symmetrisch im Winkel zueinander versetzt sind.

6. Einrichtung nach einem oder mehreren der Ansprüche 1 bis 5, **dadurch gekennzeichnet,** daß der bohrlochsohlenseitige Wulst (15''') vom Ende (10') der Ankerstange (10) höchstens ebenso weit entfernt ist, wie die Mittelebene (18) der bohrlochsohlenseitigen Hinterschneidung (12) von der Bohrlochsohle (11').

7. Einrichtung nach einem oder mehreren der Ansprüche 1 bis 6, **dadurch gekennzeichnet,** daß die Ankerstange (10) bohrlochsohlenseitig mit einer Schneide (17) versehen ist.

EP 0 459 167 A1

FIG. 2

FIG. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| A | DE - A1 - 3 727 154<br>(LIEBIG)<br>* Zusammenfassung * | 1,7 | F 16 B 13/14<br>E 04 B 1/38<br>F 16 B 13/00 |
| A | CH - A5 - 623 117<br>(FISCHER)<br>* Fig. * | 1,2 | |
| D,A | EP - A1 - 0 319 736<br>(B + BTEC HOLDING AG)<br>* Zusammenfassung * | 1 | |
| A | DE - A1 - 3 325 800<br>(LIEBIG)<br>* Zusammenfassung; Fig. 6 * | 1 | |

**RECHERCHIERTE SACHGEBIETE (Int. Cl.⁵)**

E 04 B 1/00
E 21 D 21/00
F 16 B 13/00

Der vorliegende Recherchenbericht wurde für alle Patentansprüche erstellt.

| Recherchenort | Abschlußdatum der Recherche | Prüfer |
|---|---|---|
| WIEN | 14-06-1991 | RIEMANN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82